# EUROPÄISCHE PATENTANMELDUNG

(11) **EP 1 302 802 A2**
(43) Veröffentlichungstag der Anmeldung: **16.04.2003**
(21) Anmeldenummer: 02102421.1
(22) Anmeldetag: 07.10.2002
(51) Int. Cl.: G02B 9/10

(54) **Kameramodul für ein Mobilfunkgerät**

(30) Priorität: 09.10.2001 DE 10149747
(71) Anmelder: SIEMENS AKTIENGESELLSCHAFT, 80333 München (DE)
(72) Erfinder: Betting, Andreas, 80637, München (DE)

(57) **Zusammenfassung**

Die vorliegende Erfindung betrifft ein Kameramodul für ein Mobilfunkgerät, bestehend aus einem Linsensystem und einem Sensor, wobei das Linsensystem (LS) aus zwei gleich aufgebauten im Strahlengang spiegelbildlich zueinander angeordneten Konvex-Konkav-Linsen (L1, L2) besteht und wobei die konkaven Flächen der Linsen (L1, L2) einander gegenüber liegen und zwischen den beiden Linsen (L1, L2) eine Blende (B) angeordnet ist.

## Beschreibung

Die vorliegende Erfindung betrifft ein Kameramodul für ein Mobilfunkgerät, bestehend aus einem Linsensystem und einem Sensor.

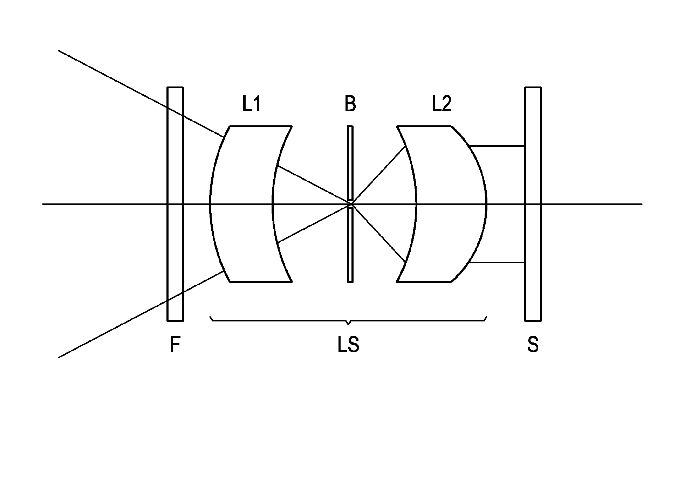

Bei dem Einsatz von Kameras, zum Beispiel von Videokameras, in Mobilfunkgeräten, ergibt sich das Problem, dass die eingebaute Kamera in der Regel nicht weit von dem aufzunehmenden Objekt entfernt ist. Das bedeutet, dass das Kameramodul einen großen Öffnungswinkel aufweisen muss. Gleichzeitig soll eine gewisse Schärfentiefe erreicht werden, was eine kleine Blende voraussetzt. Dies führt bei der Verwendung einer einfachen Anordnung, bestehend aus einer einfachen Linse mit vorgesetzten Blende, zu dem gravierenden Nachteil, dass auf Grund des großen Öffnungswinkels und der kleinen Blende Verzerrungen im Randbereich der Abbildung entstehen.

Dieser Nachteil lässt sich nur mittels aufwendiger schwerer und eine bestimmte Größe aufweisender Linsensysteme lösen, was aber dem Trend zur Verkleinerung bei Mobilfunkgeräten entgegensteht.

Aufgabe der vorliegenden Erfindung ist es, ein Kameramodul der eingangs genannten Art anzugeben, das sich durch einen leichten, kleinen und einfachen Aufbau auszeichnet.

Diese Aufgabe wird erfindungsgemäß für das eingangs genannte Kameramodul dadurch gelöst, dass das Linsensystem aus zwei gleich aufgebauten im Strahlengang spiegelbildlich zueinander angeordneten Konvex-Konkav-Linsen besteht, wobei die konkaven Flächen der Linsen einander gegenüber liegen und zwischen den beiden Linsen eine Blende angeordnet ist.

Bei dem Linsensystem des erfindungsgemäßen Kameramoduls dient die erste, das heißt die äußere Linse, zum Bündeln der mit einem großen Öffnungswinkel einfallenden Strahlen. Durch die anschließende Anordnung der Blende kann für die nachfolgende Linse, welche als Zerstreuungslinse wirkt und welche für das Abbild auf der Sensorfläche des Sensors verantwortlich ist, der Öffnungswinkel klein gehalten werden, so dass sich keine Verzerrungen im Randbereich ergeben.

Es ist also für die direkt vor dem Sensor angeordnete Linse, welche für das virtuelle Abbild verantwortlich ist, nur ein kleiner Öffnungswinkel erforderlich.

Eine zweckmäßige Ausgestaltung des erfindungsgemäßen Kameramoduls ist dadurch gekennzeichnet, dass das Material der Linsen Kunststoff ist. Dadurch ergeben sich geringe Kosten für das erfindungsgemäße Kameramodul.

Die vorliegende Erfindung wird nachstehend anhand eines in der Zeichnung dargestellten Ausführungsbeispiels eines erfindungsgemäßen Kameramoduls näher beschrieben.

Die Zeichnung zeigt schematisch den Aufbau eines erfindungsgemäßen Kameramoduls. Das erfindungsgemäße Kameramodul besteht im Wesentlichen aus einem Filter F, einem Linsensystem LS und einem Sensor S.

Bei dem Sensor S kann es sich zum Beispiel um eine bekannte CCD-Einrichtung handeln. Vor dem Linsensystem LS kann ein beliebiger handelsüblicher Filter F vorgesehen sein.

Das Linsensystem LS besteht aus der Linse L1, der Linse L2 und der Blende B. Bei den Linsen L1 und L2 handelt es sich um identische Konvex-Konkav-Linsen die spiegelbildlich zueinander angeordnet sind. Dabei wirkt die Linse L1 als Sammellinse, während die Linse L2 als Zerstreuungslinse wirkt.

Dadurch, dass der Linse L2, welche das eigentliche Abbild auf der Sensorfläche erzeugt, durch die Sammellinse L1 und die Blende B ein kleines virtuelles Bild zur Verfügung gestellt wird, benötigt sie lediglich einen kleinen Öffnungswinkel, wodurch bei dem endgültigen Abbild Verzerrungen im Randbereich vermieden werden, obwohl das Kameramodul selbst über einen großen Öffnungswinkel verfügt.

## Patentansprüche

1. Kameramodul für ein Mobilfunkgerät, bestehend aus einem Linsensystem und einem Sensor,
**dadurch gekennzeichnet ,dass** das Linsensystem (LS) aus zwei gleich aufgebauten im Strahlengang spiegelbildlich zueinander angeordneten Konvex-Konkav-Linsen (L1, L2) besteht, wobei die konkaven Flächen der Linsen (L1, L2) einander gegenüber liegen und zwischen den beiden Linsen (L1, L2) eine Blende (B) angeordnet ist.

2. Kameramodul nach Anspruch 1,
**dadurch gekennzeichnet, dass** das Material der Linsen (L1, L2) Kunststoff ist.

3. Kameramodul nach einem der vorherigen Ansprüche,
**dadurch gekennzeichnet ,dass** vor dem Linsensystem (LS) eine Filteranordnung (F) vorgesehen ist.
